**Europäisches Patentamt**

**European Patent Office**

**Office européen des brevets**

(19)

(11) Veröffentlichungsnummer: **0 080 549**
**B1**

(12) **EUROPÄISCHE PATENTSCHRIFT**

(45) Veröffentlichungstag der Patentschrift:
**29.01.86**

(51) Int. Cl.⁴: **C 10 B 27/00**, C 10 B 7/02,
C 10 B 53/00

(21) Anmeldenummer: **82103420.4**

(22) Anmeldetag: **22.04.82**

(54) **Verfahren zur Gewinnung von Pyrolysegas aus brennbaren Materialien und Einrichtung zur Durchführung des Verfahrens.**

(30) Priorität: **27.11.81 DE 3147141**

(43) Veröffentlichungstag der Anmeldung:
**08.06.83 Patentblatt 83/23**

(45) Bekanntmachung des Hinweises auf die Patenterteilung:
**29.01.86 Patentblatt 86/5**

(84) Benannte Vertragsstaaten:
**AT BE CH DE FR GB IT LI NL SE**

(56) Entgegenhaltungen:
**EP - A - 0 026 450**
**DE - A - 2 910 996**
**DE - C - 347 624**
**FR - A - 2 448 566**
**US - A - 2 586 862**
**US - A - 4 210 491**

(73) Patentinhaber: **Franz Kaiser KG, Bronnen 60,
D-8949 Salgen (DE)**

(72) Erfinder: **Kaiser, Hermann, Flonachstrasse 73,
D-8949 Eppishausen Orsteil Mörgen (DE)**

(74) Vertreter: **Kahler, Kurt, Dipl.-Ing., Raiffeisenstrasse 4,
D-8931 Walkertshofen (DE)**

## Beschreibung

Die Erfindung betrifft eine Einrichtung zur thermischen Verwertung von brennbaren Materialien gemäss dem Oberbegriff des Patentanspruchs 1. Die brennbaren Materialien können mit nicht brennbaren Stoffen durchsetzt sein.

Aus der Zeitschrift (Müll- und Abfall) Nr. 12 (1978) Seiten 371 bis 375 ist eine Anlage bekannt, bei der der indirekt beheizte Verschwelungsreaktor aus einer kontinuierlich angetriebenen Trommel besteht, deren Rotationsachse gegenüber der Horizontalen geringfügig geneigt ist. Über durch die Trommel geführte Röhren werden die heissen Abgase eines Gasmotors geleitet, so dass der Müll bei einer Temperatur von 450 - 500°C verschwelt. Das gewonnene Schwelgas wird durch Teilverbrennung mit einer Temperatur von etwa 1100 - 1200°C gekrackt, wofür ein eigener Gaswandler vorgesehen ist.

Aus der DE-OS 2 938 912 ist ein Verfahren zur Gewinnung von Pyrolysegas mit folgenden Schritten bekannt:
a) Zerkleinern des Mülls,
b) Trocknen des zerkleinerten Mülls unter Hindurchblasen von erwärmten Gasen und/oder Luft, vorzugsweise aus einem Müllbunker, während sich der Müll in einer Trockentrommel oder dergleichen befindet,
c) Beschicken eines Verschwelungsreaktors unter Aufrechterhaltung seiner Luftabdichtung,
d) Verschwelen des zugeführten Mülls in dem indirekt beheizten Verschwelungsreaktor bei Temperaturen um 500°C,
e) Durchführen eines weiteren Verschwelungsvorgangs in an den Reaktor angeschlossenen Abfördervorrichtung,
f) luftdichte Entnahme der verschwelten Reste,
g) Abtrennen von Metallen und brennbaren Substanzen, wie Kohle, Brikettierung ggf. unter Beimischung eines Bindemittels der abgetrennten brennbaren Substanzen, insbesondere Kohle,
h) Abziehen der Schwelgase von dem Reaktor und Kracken derselben in einem Gaswandler, die mit der brikettierten Kohle aus der Restmasse und/oder anderen geeigneten Brennstoffen beschickt werden kann,
i) Reinigen der gekrackten Gase und Speichern derselben,
j) Speisen eines Gasmotors mit diesen Gasen zur Erzeugung von mechanischer und/oder elektrischer Energie,
k) Beheizen des Verschwelungsreaktors mit den erwähnten Gasen und/oder den Abgasen des Gasmotors.

Es sind auch direkt beheizte Verschwelungsreaktoren bekannt, zu denen die seit langem eingesetzten Holzgasanlagen zählen. Diese können jedoch nur mit grobstückigem Holz gefüllt werden.

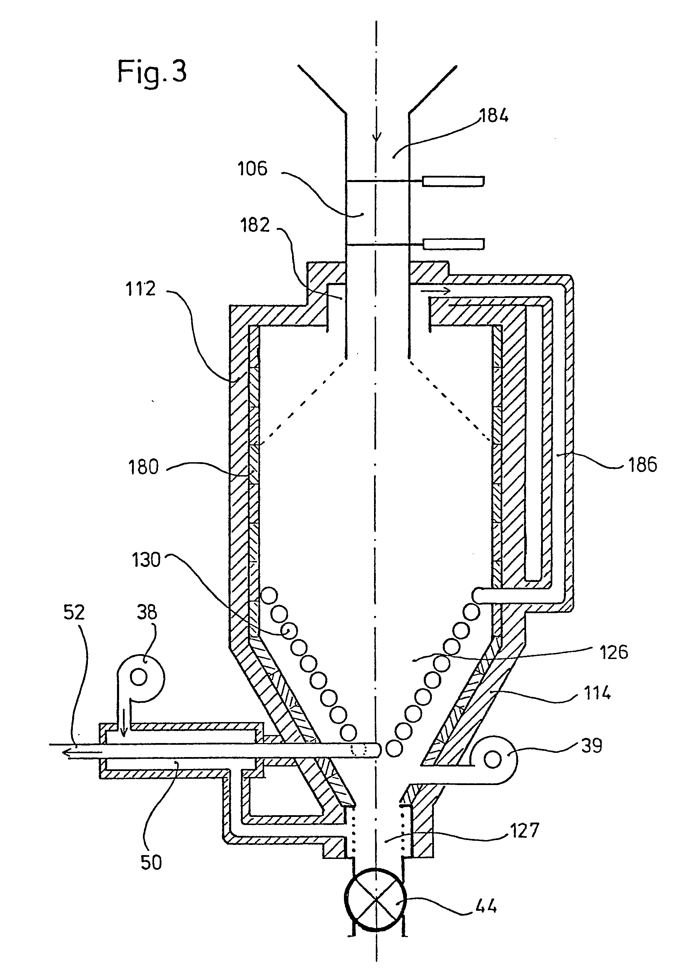

Die US-A-4 210 491 befasst sich mit einer Einrichtung zur thermischen Verwertung von brennbaren Materialien, bei der horizontal quer durch einen annähernd rechteckigen Behälter ein rohrförmiger Verschwelungsreaktor geführt ist, durch den das zu verschwelende Material mittels einer Förderschnecke geführt wird. Der Verschwelungsreaktor ist umgeben von im Behälter befindlichen, fliessenden Partikeln, die durch ein über dem Boden des Behälters angeordnetes Sieb erhitzt werden. Der grösste Teil der Schwelgase wird am Ausgang des Verschwelungsreaktors ausserhalb des Behälters abgeführt. Zur Krackung eines Teils der Schwelgase ist annähernd in der Mitte des Verschwelungsreaktors an dessen Oberseite eine Schlange angesetzt, die durch die erhitzten, fliessfähigen Teilchen geführt ist (vgl. Fig. 3). Die fliessfähigen Teilchen werden auf eine Temperatur zwischen 500 und 800°C erhitzt. Die Krackschlange ist in im wesentlichen waagerechten grossen Schleifen geführt.

Der Erfindung liegt die Aufgabe zugrunde, eine Einrichtung zur thermischen Verwertung von brennbaren Materialien mit einer einzigen Heizvorrichtung sowohl für den Verschwelungsreaktor als für die Krackvorrichtung anzugeben.

Diese Aufgabe wird gemäss der Erfindung gelöst durch eine Einrichtung gemäss dem Patentanspruch 1.

Bevorzugte Weiterbildungen der erfindungsgemässen Einrichtung sind in den Unteransprüchen gekennzeichnet.

Da bei dem erfindungsgemässen indirekt beheizten Verschwelungsreaktor die Heizung auf das umfangsmässige untere Drittel der Trommel konzentriert ist, wird dem Schwelgut auch ein entsprechend grosser Anteil der Wärmeenergie zugeführt. Die erfindungsgemässe Ausgestaltung des Verschwelungsreaktors, nämlich die Neigung der Trommel in Richtung zum Ausgang sowie die besondere Form der sich in der Trommel drehenden Fördervorrichtung, gestatten eine stockungsfreie Förderung und gleichmässige Verschwelung des Füllguts. Die besondere Ausgestaltung der Brennkammer der Krack- und Heizanlage gewährleistet eine optimale Verbrennung des Kohlestaubs.

Ein indirekt beheizter Verschwelungsreaktor wird vorzugsweise für Materialien verwendet, die mit nicht brennbaren Stoffen durchsetzt sind, während der direkt beheizte Verschwelungsreaktor für brennbare Materialien, wie Holzabfälle, mit Vorzug eingesetzt wird.

Ein Ausführungsbeispiel der erfindungsgemässen Vorrichtung und das erfindungsgemässe Verfahren werden nachstehend anhand der Zeichnungen erläutert. Es zeigen:

Fig. 1 einen Längsschnitt durch einen bei dem erfindungsgemässen Verfahren verwendeten Verschwelungsreaktor

Fig. 2 einen Querschnitt durch den Verschwelungsreaktor nach Fig. 1

Fig. 3 einen Längsschnitt durch einen bei dem erfindungsgemässen Verfahren verwendeten direkt beheizten Verschwelungsreaktor.

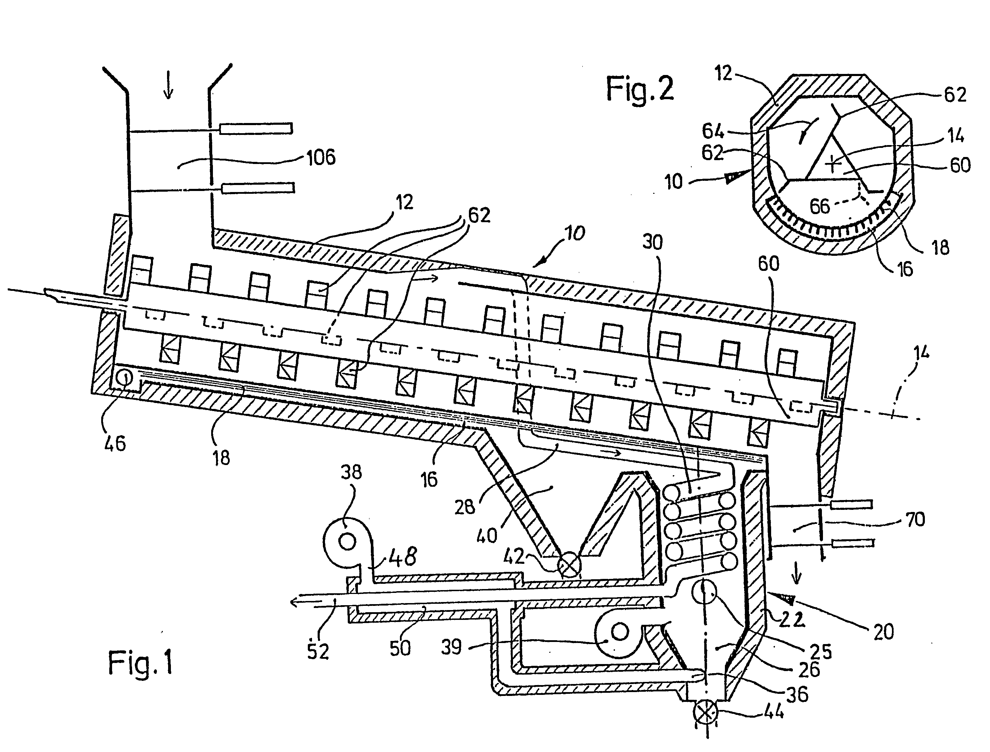

Der in Fig. 1 gezeigte Verschwelungsreaktor besteht aus einem Schweltrog 10 in Form einer feststehenden zylindrischen Trommel, deren Oberfläche mit Wärmeisolierung 12 versehen ist. Die Längsachse 14 der Trommel ist um einen bestimmten Winkel gegenüber der Horizontalen geneigt, wobei der Winkel zwischen 5 und 30°, vorzugsweise zwischen 10 und 20° liegt. Der Schweltrog 10 wird indirekt beheizt und zwar gemäss einem besonderen Merkmal der Erfindung, vorzugsweise nur im unteren Teil, etwa im unteren Drittel. Der Heizkanal 16 ist aus den Figuren 1 und 2 ersichtlich. Für eine bessere Wärmeleitung ist die Unterseite der inneren Trommeloberfläche mit Rippen 18 versehen. Bei einer bevorzugten Ausführungsform der Erfindung wird der Schweltrog 10 über eine Heizvorrichtung 20 beheizt, die direkt an den Schweltrog 10 vorzugsweise an dessen Unterseite angesetzt ist. Bei der Ausführungsform nach Fig. 1 besitzt die Heizvorrichtung 20 einen um eine senkrechte Achse zylindrischen Mantel 22, der sich nach unten kegelförmig verjüngt. Als Brennstoff wird vorzugsweise Kohlestaub über eine Förderschnecke 25 in eine Brennkammer 26 eingeführt. Die Kohlestaubzuführung kann auch über eine andere Vorrichtung erfolgen. z.B. über ein im oberen Teil der Heizvorrichtung angeordnetes bis etwa in die Mitte derselben ragendes Tauchrohr. Von besonderer Bedeutung für das erfindungsgemässe Verfahren ist, dass das sich im Schweltrog 10 entwickelnde Schwelgas über die Schwelgasleitung 28 in eine in der Heizvorrichtung 20 angeordnete Krackvorrichtung 30 geführt wird. Bei der bevorzugten Ausführungsform der Erfindung hat diese die Form einer Schlange, deren Windungen voneinander mit Abstand geführt sind. Im unteren Brennkammerbereich befindet sich der Auslass 36 eines Gebläses 38, der derart in die Brennkammer 26 gerichtet ist, dass der Luftstrom tangential zum Umfang der Brennkammer 26 eine entsprechende Strömung und Wirbelung und somit eine optimale Verteilung und Verbrennung des eingeführten Kohlestaubs ergibt.

Der verbrennende Kohlestaub erhitzt unter Vorbeistreichen an der Schlange 30 die durchgeführten Schwelgase auf Temperaturen zwischen 1000 und 1200°C, so dass diese während der Durchführung durch die Heizvorrichtung 20 gekrackt werden. Nachdem der Kohlestaub seine Energie abgegeben hat, fällt er als Asche in den unterhalb dem Schweltrog 10 neben der Heizvorrichtung 20 angeordneten Aschebunker 40. Die sich in diesem bzw. im kegelförmigen unteren Teil der Heizvorrichtung 20 ansammelnde Asche wird beispielsweise über Zellradschleusen 42 bzw. 44 entnommen. Reicht der anfallende Kohlestaub nicht aus, so kann auch ein Teil des anfallendes Gases zur Beheizung der Heizvorrichtung 20 verwendet werden.

Die durch die glühende Kohle aufgeheizte Heissluft steigt im Heizkanal 16 hoch und erhitzt das im Inneren des Schweltrogs 10 aufliegende Schwelgut auf die entsprechende Schweltemperatur von ca. 400 bis 600°C. Am Ende des Heizkanals 16 ist ein Rauchgasabzug 46 vorgesehen. Die im Rauchgas noch befindliche Wärme kann über einen Wärmaustauscher vorzugsweise zum Trocknen des Zugabematerials nutzbringend verwendet werden.

Die Brennkammer 26 kann auch mit einem Öl- oder Gasbrenner 39 zum Anheizen der Anlage versehen sein. Von besonderem Vorteil ist es, die vom Gebläse über die Leitung 48 angesaugte Frischluft über einen Wärmetauscher 50 zu leiten, durch den die Abführleitung 52 der gekrackten Gase geführt ist.

Die in der Heizvorrichtung angeordnete Krackvorrichtung 30 könnte auch aus einer gitter-, rippenoder trichterförmigen Rohranordnung bestehen. Eine andere Möglichkeit ergibt sich dadurch, dass die Wände der Heizvorrichtung 20 doppelwandig ausgeführt werden und die zu krackenden Schwelgase durch diesen doppelwandigen Mantel geführt werden..Vorzugsweise wird die Krackvorrichtung ebenso ausgebildet, so dass eine möglichst grosse Oberfläche der in der Heizvorrichtung 20 vorhandenen Temperatur ausgesetzt wird.

Von weiterer Bedeutung für die Erfindung ist die besondere Ausgestaltung der Förderung des Schwelguts durch den Schweltrog 10. Diese Förderung wird einmal durch die Neigung der Achse 14 gegenüber der Horizontalen begünstigt. Zum anderen ist eine Fördervorrichtung vorgesehen, die aus einer sich konzentrisch zur Längsachse 14 erstreckenden Profilachse 60 besteht. Das Profil besitzt vorzugsweise den Querschnitt eines gleichseitigen Dreiecks an dessen Ecken Umwälzschaufeln 62 angebracht sind. Die Umwälzschaufeln 62 können senkrecht zur gegenüberliegenden Dreieckseite verlaufen. Alternativ dazu ist eine Verlängerung der jeweiligen Dreieckseiten in einer Richtung möglich, gegebenenfalls mit einer Abwinklung in Drehrichtung gemäss Pfeil 64. Wie in Fig. 2 gestrichelt bei 66 angedeutet, sind die Umwälzschaufeln federnd ausgebildet, so dass sie entsprechend ausgelenkt werden können und ein Verklemmen mit harten Gegenständen vermieden wird. Fig. 1 zeigt, dass die an den jeweiligen Ecken des Dreieckprofils angebrachten Umwälzschaufeln gegeneinander versetzt sind. Die Drehung der Profilachse 60 kann entweder kontinuierlich oder aber intermittierend erfolgen. Bei der Drehung wird das jeweils am Boden des Schweltrogs 10 erhitzte Schwelgut teilweise mitgenommen und teilweise durcheinandergerührt. Wenn die Umwälzschaufeln in die Gegend ihrer obersten Stellungen gelangen, gleitet das Schwelgut auf den geraden Kanten der Dreieckprofilachse 60 nach unten in die Heizzone ab. Gemäss der Erfindung werden die über die Ausfallschleuse 70 abgegebenen Schwelreste beispielsweise einer Hammermühle mit nachgeschaltetem Windsichter zugeführt; hier wird die Kohle der Schwelreste in Kohlestaub zermahlen und dieser von schwereren Teilen getrennt. Bevor der Kohlestaub über einen Zwischenbunker mit der Förderschnecke 25 der Heizvorrichtung 20 zugeführt wird, werden die Buntmetalle durch ein Sieb abgeschieden.

Bevor die zu verschwelenden Abfallstoffe über die Einlassschleuse 106 (Fig. 1) dem Schweltrog 10 zugeführt werden, erfolgt vorzugsweise eine Trocknung unter Verwendung der in der Gesamtvorrichtung auftretenden Abwärme.

Voranstehend wurde ein Verfahren und eine Vorrichtung zur Gewinnung von Pyrolysegas unter besonderer Verbesserung des Wirkungsgrades der Gesamtanlage beschrieben. Die Verbesserung des Wirkungsgrades ergibt sich einmal durch die gleichmässige und gutmischende Förderung des Schwelguts durch den geneigten Schweltrog, zum anderen aus der direkt angesetzten Heizvorrichtung 20 in der zudem noch die Krackvorrichtung für die abgezogenen Schwelgase ohne Teilverbrennung derselben erfolgt. Die Ausnutzung der Gesamtanlage wird weiter verbessert durch die direkte Gewinnung und Verwendung des beim Verschwelen anfallenden Kohlestaubs für die Beheizung des Schweltrogs 10.

Anhand von Fig. 3 wird ein zweites Ausführungs-beispiel der erfindungsgemässen Einrichtung be-schrieben, die einen direkt beheizten Verschwelungsreaktor verwendet. Der Verschwelungsreaktor weist in diesem Fall einen aufrechtstehenden Mantel 112 auf, der aus feuerfestem Isoliermaterial besteht oder aus Metall mit einer Aussenverkleidung aus Isoliermaterial. Der zylinderförmige Mantel 112 geht nach unten über einen Trichter 114 in eine Luftzufuhrkammer 127 über, deren unteres Ende durch eine Ascheabführvorrichtung 44 abgeschlossen ist. Das Innere des Verschwelungsreaktors ist mit hitze-beständigem Material, insbesondere Schamottstei-nen 180 ausgekleidet.

Der direkt beheizte Verschwelungsreaktor gemäss diesem Ausführungsbeispiel ist bevorzugt für Anwendungen gedacht, bei denen überwiegend oder ausschliesslich verbrennbare Materialien, wie Sägespäne, zerkleinerte Holzabfälle, Rinde, pflanzliche Abfälle, Papierschnitzel, Torf, Kohle oder dergleichen verschwelt werden, bei denen der Verbrennungsrückstand praktisch nur aus Asche besteht.

Von besonderer Bedeutung ist bei dieser Ausführungsform die Anordnung der Krackvorrichtung 130 in der Heizzone 126 des Verschwelungsreaktors. Obwohl diese Krackvorrichtung 130 ähnliche Formen haben kann, wie sie beim ersten Ausführungsbeispiel angegeben sind, wird gemäss der Erfindung im vorliegenden Fall die Krackvorrichtung 130 bevorzugt als Rost ausgebildet und angeordnet. Dieser Rost besteht aus einer Vielfachanordnung von einander beabstandeten hitzebeständigen Röhren in ebener oder aber bevorzugt in einer trichterförmigen Anordnung, wie sie in der Fig. 3 gezeigt ist.

Von weiterer Bedeutung für die Erfindung ist der Abzug der Schwelgase, der über eine zyklonähnliche Schwelgasabzugvorrichtung 182 erfolgt, die am oberen Ende des Mantels 112 um einen Materialeingangsschacht 184 herum angeordnet ist. Die Schwelgasabzugvorrichtung 182 ist über eine wärmeisolierte Schwelgasleitung 186 mit der Krackvorrichtung 130 eingangsseitig verbunden, während an deren Ausgang die Pyrolysegasleitung 52 angeschlossen ist. Wie beim ersten Ausführungsbeispiel, kann ein Wärmetauscher 50 vorgesehen sein, der die im Bereich der Aschesammelvorrichtung 127 mittels des Frischluftgebläses 38 zugeführte Luft vorwärmt. Zumindest für das Anheizen der Anlage kann ein Öl-oder Gasbrenner 39 angeordnet werden.

Die Arbeitsweise des direkt beheizten Schwelungsreaktors nach Fig. 3 ist wie folgt: Das zu verschwelende Gut wird in dem Einlaufschacht 184 aufgegeben und über die von einem Füllstandsanzeiger gesteuerte Schleuse 106 dem Reaktorraum chargenweise zugeführt. Hier erfolgt die Verschwelung bei ca. 400 bis 600°C unter Frischluftzufuhr in die Heizzone 126. Die bei der Verschwelung übriggebliebene Asche wird über die Ascheabführvorrichtung 44 abgefördert, während die Schwelgase über die Schwelgasabzugvorrichtung 182 und die Schwelgasleitung 186 durch die Krackvorrichtung 130 geleitet werden. Da in der Heizzone eine Temperatur von ca. 1000°C bis 1200°C herrscht, werden in der Krackvorrichtung 130 die Schwelgase ohne Teilverbrennung aufbereitet, insbesondere gekrackt. Die entstehenden noch heissen Pyrolysegase werden durch den Wärmetauscher 50 geleitet und erwärmen die diesem zugeführte Frischluft. Über die Leitung 52 werden die Pyrolysegase einem nicht gezeigten Nasswäscher zugeführt, in dem sich Reste von Russ und Asche abscheiden. Die Gase stehen dann für die Speicherung bzw. für den Verbrauch zur Verfügung. Das Waschwasser wird gereinigt und im Kreislauf wieder dem Nasswäscher zugeführt.

Aufgrund der Schwelgasaufbereitung in der Krackvorrichtung fallen nur äusserst geringe Mengen an Kondensaten wie Teer oder dergleichen an, so dass die Anlage ohne grössere Wartung für lange Zeit störungsfrei läuft und keine besonderen Vorkehrungen für die Gasreinigung mittels Filter oder dergleichen getroffen werden müssen.

**Patentansprüche**

1. Einrichtung zur thermischen Verwertung von brennbaren Materialien, die zerkleinert einem direkt oder indirekt beheizten Verschwelungsreaktor (10, 112) zugeführt werden, der oberhalb einer Heizvorrichtung (20, 126) angeordnet ist, wobei die sich entwickelnden Schwelgase an der oberen Seite des Verschwelungsreaktors entnommen und einer Krackvorrichtung (30, 130) zugeführt werden, die von der Heizvorrichtung (20, 126) erhitzt wird, dadurch gekennzeichnet, dass die Krackvorrichtung (30, 130) bei direkt beheiztem Verschwelungsreaktor (112) in dessen Heizzone eingebaut ist und zugleich als Feuerungsrost (130) dient, während sie bei indirekt beheiztem Verschwelungsreaktor (10) in der Aus-brandzone der am Verschwelungsreaktor angebau-ten Heizvorrichtung (20) eingebaut ist und dass die Schwelgase aus dem Verschwelungsreaktor durch eine Vorrichtung nach Art eines Zyklons abgesaugt und der Krackvorrichtung zugeführt werden.

2. Einrichtung nach Anspruch 1, dadurch gekennzeichnet, dass die Krackvorrichtungen eine Schlangen-, Rippen- oder Gitterform aufweisen.

3. Einrichtung nach Anspruch 1 oder 2, dadurch gekennzeichnet, dass der indirekt beheizte Verschwelungsreaktor aus einem feststehenden Schweltrog (10) mit innenliegender Umwälzvorrichtung (60) besteht, dessen unteres Drittel (16) mit Wärmeleitrippen (18) versehen ist und durch die angegliederte Heizvorrichtung (20) beheizt wird.

4. Einrichtung nach Anspruch 3, dadurch gekennzeichnet, dass die im Schweltrog (10) angeordnete Umwälzvorrichtung aus einer konzentrisch zum Schweltrog (10) angeordneten Profilachse (60) mit dreieckigem Querschnitt besteht, an der radial fe-dernde Umwälzschaufeln (62) vorzugsweise zuein-ander versetzt angeordnet sind.

5. Einrichtung nach Anspruch 3 oder 4, dadurch gekennzeichnet, dass die Längsachse des Schweltrogs (10) um einen Winkel zwischen 5° und 30°, vorzugsweise zwischen 10° und 20°, insbesondere 10° gegenüber der Horizontalen geneigt ist.

6. Einrichtung nach einem der Ansprüche 1 bis 5, dadurch gekennzeichnet, dass ein Frischluftgebläse (38) mit seinem Auslass tangential zum Inneren der Heizvorrichtung (20, 126) angeordnet ist, um eine rotierende Strömung zu erzeugen.

7. Einrichtung nach einem der vorhergehenden Ansprüche, dadurch gekennzeichnet, dass die Schwelgase über eine obere Zuleitung (28) der Krackvorrichtung (30, 130) zugeführt werden.

8. Einrichtung nach einem der vorhergehenden Ansprüche, dadurch gekennzeichnet, dass die Krackvorrichtung (30, 130) bei indirekt beheiztem Verschwelungsreaktor (10) stehend und koaxial in einem vertikalen Schacht der Heizvorrichtung (20) angeordnet ist.

## Claims

1. Apparatus for thermical treatment of combustible materials supplied in comminuted form to a directly or indirectly heated carbonization reactor (10, 112) provided above a heating means (20, 126) wherein the developing carbonization gases are removed at the upper part of the carbonization reactor and supplied to a cracking means (30, 130) which is heated by the heating means (20, 126), characterized in that with a directly heated carbonization reactor (112) the cracking unit is incorporated in the heating zone thereof and serves simultaneously as a furnace grating (130), whilst with an indirectly heated carbonization reactor (10) it is incorporated in the combustion zone of the heating means (20) attached to the carbonization reactor, and then the carbonization gases are extracted from the carbonization reactor by a means of the type of a cyclone and supplied to the cracking means.

2. Apparatus of claim 1, characterized in that the cracking means are of a serpentine, rib or grid form.

3. Apparatus of claim 1 or 2, characterized in that the indirectly heated carbonization reactor comprises a fixed carbonization trough (10) having a rotating stirring means (60) within, being provided at its lower third part (16) with heat conductive ribs (18) and being heated by the attached heating means (20).

4. Apparatus of claim 3, characterized in that the rotating stirring means provided within the carbonization trough (10) comprises a profile shaft (60) arranged concentrically to the carbonization trough (10) having a triangular cross-section and being provided with radially extending resiliant stirring blades (62) preferably offset to each other.

5. Apparatus of claim 3 or 4, characterized in that the longitudinal axis of the carbonization trough (10) is inclined to the horizontal by an angle between 5° and 30° preferably between 10° and 20°, more preferably 10°.

6. Apparatus of any of the claims 1 to 5, characterized in that there is provided a fresh air blower (38) having an outlet directed tangentially to the interior of the heating means (20, 126) in order to cause a rotating flow.

7. Apparatus of any of the preceding claims, characterized in that the carbonization gases are supplied to the cracking means (30, 130) via an upper feeding duct (28).

8. Apparatus of any of the predecing claims, characterized in that with an indirectly heated carbonization reactor (10) the cracking means (30, 130) is arranged upright and coaxially in a vertical cavity of the heating means (20).

## Revendications

1. Dispositif pour le traitement thermique des matériaux combustibles soumis, en forme cominuée, à un réacteur chauffé directement ou indirectement, ce-là se trouvant au-dessus d'un dispositif d'échauffage (20, 126); au même temps les gases de carbonisation qui se developpent sont écartés par le côté du haut du réacteur chauffé de carbonisation et sont soumis à un dispositif de cracking (30, 130) chauffé par le dispositif d'échauffage (20, 126), caractérisé en ce que, en cas d'un réacteur chauffé de carbonisation directement le dispositif de cracking est installé dans la zone d'échauffage dudit réacteur et sert au même temps de grille d'échauffage (130), pendant que en cas d'un réacteur chauffé de carbonisation indirectement (10), il est installé dans la zone d'extinction du dispositif de chauffé de carbonisation et que les gases de carbonisation sont aspirés du réacteur chauffé de carbonisation par un dispositif à la manière d'un cyclone et sont soumis au dispositif de cracking.

2. Dispositif suivant la revendication 1, caractérisé en ce que les dispositifs de cracking ont une forme de serpent, d'aillette ou de grille.

3. Dispositif suivant la revendication 1 ou 2, caractérisé en ce que le réacteur chauffé de carbonisation indirectement est composé d'un récipient de carbonisation fixe (10) avec un dispositif de rotation à l'intérieur et dont la partie basse (16) est fournie des aillettes de conduction de chaleur et est chauffé par le dispositif de chauffage adjoint.

4. Dispositif suivant la revendication 1 ou 2, caractérisé en ce que le dispositif de rotation est composé d'un axe de profile (60) arrangé concentriquement au récipient de carbonisation, ayant une coupe transversale triangle (10) et des pelles de rotation arrangées à la forme d'un échiquier qui font ressort radialment.

5. Dispositif suivant les revendications 3 ou 4, caractérisé en ce que l'axe verticale du récipient (10) a un angle d'inclinaison entre 5° et 30°, préférément entre 10° et 20° et spécialement de 10° vers l'horizontale.

6. Dispositif suivant une des revendications 1 à 5, caractérisé en ce que la sortie d'un appareil soufflant de l'air frais (38) est arrangé tangentialement vers l'intérieur du dispositif d'échauffage (20, 126) afin de produire un flux rotant.

7. Dispositif suivant une des revendications antérieures, caractérisé en ce que les gases de carbonisation sont soumis au dispositif de cracking par un adducteur arrangé en haut.

8. Dispositif suivant une des revendications antérieures, caractérisé en ce que le dispositif de cracking (30, 130) dun réacteur chauffé de carbonisation indirectement est arrangé verticalement et coaxialement dans une cheminée verticale du dispositif (20.

Fig.2

Fig.1

Fig.3